# EUROPÄISCHE PATENTSCHRIFT

(11) **EP 0 644 077 B1**
(45) Veröffentlichungstag und Bekanntmachung des Hinweises auf die Patenterteilung: **09.04.1997**
(21) Anmeldenummer: 94111926.5
(22) Anmeldetag: 30.07.1994
(51) Int. Cl.: B60K 23/08

(54) **System zur Steuerung der Kupplungen im Antriebsstrang eines Kraftfahrzeuges**
System for controlling the clutches in the power train of a vehicle
Système de contrôle pour des embrayages dans un train d'entraînement d'un véhicule

(30) Priorität: 16.08.1993 DE 4327507
(43) Veröffentlichungstag der Anmeldung: 22.03.1995
(73) Patentinhaber: STEYR-DAIMLER-PUCH AKTIENGESELLSCHAFT, 1010 Wien (AT)
(72) Erfinder: Frühwirth, Gerhard Josef, Dipl.-Ing., A-4274 Schönau (AT); Deinhofer, Johann, A-3352 St. Peter in der Au (AT); Stelzeneder, Franz, Dipl.-Ing., A-4400 Steyr (AT); Pichlbauer, Günter, A-4400 Steyr (AT); Hager, Johann, A-4540 Bad Hall (AT); Reif, Johann Peter, Dr. Dipl.-Ing., A-5360 St. Wolfgang (AT)

(56) Entgegenhaltungen:
- DE-A- 3 821 080
- US-A- 5 275 254

## Beschreibung

Die Erfindung handelt von einem System zur selbsttätigen Steuerung der Kupplung im Antriebsstrang eines allradgetrieben Geländefahrzeuges, wobei ausgehend von Raddrehzahlsignalen Schlupfsignale gebildet, mit Schwellenwerten verglichen und so Steuersignale für die Kupplungen erzeugt werden.

Unter allradgetriebenen Geländefahrzeugen werden Fahrzeuge mit zwei oder drei antreibbaren Achsen verstanden, deren Anforderungsprofil vorwiegend auf die Fahrt im Gelände ausgerichtet ist. Bei diesen kann eine der Achsen (meist die Vorderachse) entweder zuschaltbar oder permanent angetrieben sein. Je nachdem dient die entsprechende Kupplung entweder der Zuschaltung des Vorderradantriebes oder der Sperrung des Zentraldifferentiales. Weiters ist bei diesen Fahrzeugen zur Erzielung voller Geländegängigkeit je eine Kupplung zum Sperren der Achsdifferentiale vorgesehen. Die Kupplungen können prinzipiell sowohl Lamellenkupplungen als auch formschlüssige Kupplungen sein, doch wird bei schweren Fahrzeugen wegen der hohen zu übertragenden Drehmomente und des beschränkten Einbauraumes letzteren der Vorzug gegeben.

Das Lenken eines Allradfahrzeuges im Gelände ist eine Kunst, die nicht zuletzt darin besteht, je nach Fahrzustand und Geländebeschaffenheit den richtigen Eingriff in das Antriebssystem (Zuschalten des Vorderachsantriebes, Betätigung von Längssperre und Quersperren) vorzunehmen. Deshalb werden in bekannten geländegängigen Fahrzeugen die verschiedenen Eingriffe vom Fahrer vorgenommen, wozu einzelne Schalter oder zumindest ein Schalter mit mehreren Schaltstellungen vorgesehen sind. Dann ist zwar eine starre Aufeinanderfolge der Eingriffe vorgeben, doch bei der Beurteilung des Fahrzustandes und bei der Wahl des Antriebsmodus hilft das dem Fahrer nicht.

Zwar sind Selbstsperrdifferentiale bekannt, die abhängig von der anstehenden Drehzahldifferenz sperren. Sind jedoch mehrere Differentiale in Serie angeordnet (in Kraftflußrichtung zuerst ein Längsdifferential, nachgeordnet die Achsdifferentiale), tritt ein Problem auf, das am besten durch ein Beispiel beschrieben ist:

Rutscht bei einem Fahrzeug mit einer solchen Differentialanordnung das rechte Hinterrad, so verändern sich durch die Wirkung der ungesperrten Differentiale alle Drehzahlen im Antriebsstrang. Die Differenz zwischen den Drehzahlen der beiden Hinterräder ist am größten, die Differenz zwischen den mittleren Drehzahlen (Mittelwertbildung durch die Achsdifferentiale) der Vorderräder und der Hinterräder ist geringer. Das würde zur Sperre des Hinterachsdifferentiales führen mit dem Effekt, daß nur ein treibendes Rad zur Verfügung steht (das rechte rutscht ja), das auch leicht die Bodenhaftung verliert. Erst wenn dieses dann auch rutscht, wird die Längssperre ausgelöst und es treiben drei Räder, soferne das Fahrzeug bis dahin nicht schon steckengeblieben ist. Außerdem besteht bei Rutschen der Räder einer Achse die Gefahr, daß diese seitlich wegschieben.

Richtig wäre es in diesem Fall gewesen, zuerst das Längsdifferential zu sperren. Wenn man aber die Schaltschwelle des Längsdifferentiales entsprechend tiefer als die des Querdifferentiales legt, wird dieses zwar zuerst gesperrt, dadurch wird die Drehzahldifferenz an den Hinterrädern auch geringer, aber die Schaltschwelle für die Sperre des hinteren Querdifferentials wird nicht mehr erreicht.

Wenn das Fahrzeug statt einer Längssperre mit einem zuschaltbaren Vorderradantrieb ausgestattet ist, tritt der beschriebene Effekt noch stärker auf. Man kann sagen: Die einzelnen Drehzahldifferenzen hängen vom Schaltzustand der Kupplungen ab. Durch diese Rückwirkung kann bei einzelner automatischer Schaltung erratisches Hin- und Herschalten auftreten.

Außerdem werden Selbstsperrdifferentiale in der Regel durch Lamellenkupplungen (und meist nur teilweise) gesperrt, die, abgesehen von ihren bekannten Nachteilen, unter solchen Bedingungen viel stärker verschleißen.

Wenn man bei einer automatischen Steuerung hingegen von den Drehzahlen aller Räder ausgeht und diese zentral verarbeitet, braucht man sehr komplizierte und weitverzweigte logische Kriterien, die doch nicht alle möglichen Situationen erfassen können. Da die Drehzahlen der Räder ja auch hier wieder vom Schaltzustand der einzelnen Kupplungen abhängen, besteht trotzdem die Gefahr unerwünschter Schaltungen, vor allem unerwünschter und sicherheitsgefährdender Rückschaltungen in den geöffneten Zustand.

Aus der DE-C 35 05 455 und der Zeitschrift AUTOMOBIL-INDUSTRIE 1/87 (Seiten 27 bis 32) ist ein System (es handelt sich um die 4-MATIC von MERCEDES-BENZ) bekannt, das die Zuschaltung des Vorderachsantriebes, eine Zentralsperre und eine Hinterachssperre automatisch betätigt, doch ist dessen Anforderungsprofil sehr stark auf die Erfordernisse eines schnellen Straßenfahrzeuges und auf Sicherheit ausgerichtet, es unterscheidet sich grundlegend von dem der Fahrt im Gelände. Bei diesem System ist für die Hinterachse ein Selbstsperrdifferential vorgesehen und die Steuerung der Vorderachszuschaltung und des Längsdifferentiales geht nur von den Achsdrehzahlen aus. Außerdem ist dieses System aus den erwähnten Sicherheitsgründen von dem weichen Greifen von Lamellenkupplungen abhängig.

Ein Steuersystem für die Steuerung einzelner Kupplungen ist zum Beispiel in der EP-OS 510 457 der Anmelderin beschrieben. Dort werden zur Steuerung einer formschlüssigen Kupplung, wobei alle oben aufgezählten Anwendungen in Frage kommen, Drehzahldifferenzen mit Schwellenwerten verglichen. Die dort beschriebenen besonderen Systeme arbeiten mit einfachwirkenden Betätigungselementen, die keinen Ausrückbefehl benötigen. Die vorliegende Erfindung hat die Zusammenfassung derartiger Einzelsysteme zum Gegenstand und ist auf die dort beschriebenen Systeme anwendbar, jedoch keinesfalls auf diese beschränkt. Sie ist auch für beliebige und beliebig gesteuerte formschlüssige Kupplungen und sogar für Lamellenkupplungen geeignet.

Die Erfindung verfolgt daher das Ziel, ein gattungsgemäßes automatisches Steuerungssystem zu schaffen, das den Erfordernissen der Fahrt auch schwerer Fahrzeuge in schwierigem Gelände in jeder Hinsicht gewachsen ist.

Erfindungsgemäß wird das durch das Zusammenwirken der Merkmale a),b) und c) des ersten Anspruches erreicht. Dadurch, daß a) für jede einzelne Kupplung jeweils ein eigenes Steuermodul vorgesehen ist, das Steuersignale für die eigene Kupplung erzeugt, ist das System dezentralisiert und eine weitverzweigte Logik zur Analyse der Raddrehzahlsignale erübrigt sich. Dabei hängt es von der Ausführung des Systems ab, ob die einzelnen Moduln nur Programmmoduln sind (wenn das System aus einem Mikroprozessor besteht) oder Hardwaremoduln (wenn das System aus festverdrahteten Bauelementen besteht). Dem hierarchischen Zusammenhang der Kupplungen wird dadurch Rechnung getragen, daß b) die Steuermoduln der hierarchisch tieferen Kupplungen auch Steuersignale an eine oder mehrere hierarchisch höhere Kupplung(en) abgeben, bevor sie die eigene Kupplung ansteuern. Dadurch entsteht eine "demokratische Hierarchie", die einzelnen Systeme können in ein anderes System eingreifen, bevor sie sich selbst aktivieren.

Aber auch das genügt nicht, denn bei stark veränderlichen Drehzahldifferenzen könnte bei der endlichen Dauer des Einrückens eine Auslösung eine andere überholen. Außerdem könnte bei sehr steilem Anstieg einer Raddrehzahldifferenz (plötzlicher Verlust der Bodenhaftung eines Rades, als "Losbrechen" bekannt) die rechtzeitige Schaltung einer Klauenkupplung nicht mehr möglich sein. Deshalb sind c) die Schlupfsignale durch Integration der Drehzahldifferenzen gebildete Schlupfsummensignale und werden mit Schlupfsummenschwellenwerten verglichen. Das bedeutet, je größer die Drehzahldifferenz, desto schneller wird die Schlupfsummenschwelle erreicht. Die Folge ist, daß bei stark ansteigender Drehzahldifferenz die Schaltung sehr schnell, bei geringerem Anstieg sehr langsam bzw bei geringer Drehzahldifferenz erst nach einer längeren Zeit erfolgt.

Weiters ist durch die Schlupfsummen auch bei wechselndem Schlupf die vorzeichenrichtige Beurteilung möglich und es werden unnötige Schaltungen vermieden. Die Schlupfsumme hat die anschauliche Dimension eines Winkels oder eines Bogenmaßes, dadurch lassen sich die Schaltschwellen auch mechanischen Gegebenheiten anpassen, insbesondere den Eigenheiten einer Klauenkupplung. So läßt sich auch sicherstellen, daß die Schlupfsummenschwellen nur wirken, wenn sie aufwärts durchlaufen werden, und, daß die Haltefunktion wirkt, wenn die zu summierenden Werte wieder kleiner werden.

In Verfolgung des Erfindungsgedankens ist es am einfachsten, der hierarchischen Anordnung der Kupplungen dadurch Rechnung zu tragen, daß die Schwellenwerte in den Steuermoduln der hierarchisch tieferen Kupplungen für das Einrücken hierarchisch höherer Kupplungen tiefer liegen als die für das Einrücken der eigenen Kupplung und daß bei deren Erreichen nebst der Auslösung des Einkuppelns eine Haltefunktion aktiviert wird, die sicherstellt, daß die Kupplung für eine bestimmte Zeit eingerückt bleibt (Anspruch 2). Wenn beispielsweise die Drehzahldifferenz der Hinterräder, die im Modul Hinterachsquersperren verarbeitet wird, ansteigt, wird dieses Modul zuerst eine Sperre des Längsdifferentiales veranlassen, da diese Schwelle tiefer als die zur Ansteuerung der Quersperre liegt. Es wird aber auch dafür sorgen, daß diese für eine bestimmte Zeit (die auch von der Geschwindigkeit oder der Änderungsgeschwindigkeit abhängen kann) eingerückt bleibt, weil diese Sperre die Drehzahldifferenz soweit herabsetzen kann, daß es gar nicht mehr zu einer Auslösung der eigenen Sperre (der Hinterachsquersperre) kommt. Wenn sich dadurch aber keine Verringerung der Drehzahldifferenz ergibt, wird die Schlupfsumme weiter ansteigen und den nächsten Schwellenwert für die Auslösung der eigenen Kupplung erreichen. Die Haltefunktion stellt dabei sicher, daß in dieser Zeit kein Zurückschalten (Wiederausrücken der Kupplung) erfolgt.

Bei Anwendung der Erfindung auf ein Fahrzeug mit permanentem Hinterachsantrieb und zuschaltbarem Vorderachsantrieb ist das System zweckmäßig so ausgebildet, daß die Kupplung für die Zuschaltung des Vorderachsantriebes durch ihren eigenen Modul, durch einen Hinterachsquersperrenmodul und durch einen Vorderachsquersperrenmodul schließbar ist und daß der Hinterachsquersperrenmodul die Kupplung für die Zuschaltung des Vorderradantriebes für eine bestimmte Zeit eingerückt hält (Anspruch 3).

Bei Anwendung der Erfindung auf ein Fahrzeug mit permanentem Antrieb von Hinterachse und Vorderachse und zuschaltbarer Längssperre ist das System zweckmäßig so ausgebildet, daß die Kupplung für die Längssperre durch ihren eigenen Modul, durch einen Hinterachsquersperrenmodul und durch einen Vorderachsquersperrenmodul schließbar ist und daß der Hinterachsquersperrenmodul und der Vorderachsquersperrenmodul die Kupplung für die Zuschaltung des Vorderradantriebes für eine bestimmte Zeit eingerückt hält (Anspruch 4).

Diese Haltefunktion verringert sowohl bei Systemen mit - nach welchen Kriterien auch immer - gesteuerter Rückschaltung, als auch bei Systemen mit selbsttätiger Rückschaltung durch Drehmomentabfall (EP-OS 510 457) die Schalthäufigkeit im Gelände und stellt nebstbei einen wertvollen Sicherheitsgewinn dar.

In konsequenter Verfolgung des Erfindungsgedankens ist die Kupplung der Hinterachsquersperre durch ihren eigenen Modul und durch den Modul der Vorderachsquersperre schließbar und der Modul der Vorderachsquersperre hält die Kupplung der Hinterachsquersperre für eine bestimmte Zeit eingerückt (Anspruch 5). Demzufolge führt Rutschen eines Vorderrades nicht gleich zur Sperre des Vorderachsdifferentiales, was die Lenkbarkeit des Fahrzeuges beeinträchtigen würde, sondern es wird zuerst die Hinterachsquersperre aktiviert, was auch einen höheren Traktionsgewinn bringt. Die Vorteile der Haltefunktion sind wieder die oben erwähnten. Aus demselben Grund kann das Modul der Vorderachsquersperre nur die eigene Kupplung schließen (Anspruch 6). Dadurch ist sichergestellt, daß zur Erhaltung der Lenkbarkeit diese Sperre zuletzt geschlossen wird.

Bei Anwendung der Erfindung auf ein Fahrzeug mit zwei angetriebenen Hinterachsen und einer Zwischenachssperre, ist es vorteilhaft, wenn die Kupplung der Zwischenachssperre durch ihren eigenen Modul und durch die Moduln für die Quersperren der beiden Hinterachsen schließbar ist und daß der Modul des Längsdifferentiales, der Modul der Quersperren und der Modul der Vorderachsquersperren die Kupplung für die Sperre des Zwischenachsdifferentiales für eine bestimmte Zeit eingerückt halten (Anspruch 7). Damit ist der Tatsache Rechnung getragen, daß die Zwischenachssperre hierarchisch über den Hinterachsquersperren und der Zentralsperre liegt. Im Fahrversuch hat sich weiter gezeigt, daß eine gestaffelte Betätigung der beiden Hinterachsquersperren in der Regel keine Vorteile mehr bringt, daher ist es eine willkommene Vereinfachung, beide Hinterachsquersperren einem gemeinsamen Modul zuzuordnen (Anspruch 8).

Geländefahrzeuge werden auch auf festen Straßen bewegt. Deshalb ist es aus Sicherheitsgründen vorteilhaft, ab einer bestimmten Geschwindigkeit die Betätigung der Quersperren zu unterbinden, im Rahmen der Erfindung können ihre Moduln aber eine hierarchisch höhere Sperre auslösen (Anspruch 9). Die mögliche Auslösung einer Längssperre durch Querschlupf bringt einen erheblichen und auf keine andere Weise zu erreichenden Sicherheitsgewinn.

Der Modul der Vorderachssperre kann unter Durchbrechung der Hierarchie sowohl die Hinterachssperre als auch die Zentralsperre ansteuern, indem in ihm diese Schaltschwellen tiefer als die für die eigene Sperre gelegt sind. Wenn in weiterer Ausgestaltung der Erfindung diese Schwellenwerte so gelegt sind, daß nicht zwei Kupplungen gleichzeitig geschaltet werden können (Anspruch 10), wird der Einschaltstoß verringert und es besteht bei elektrischer oder pneumatischer Betätigung nicht die Gefahr, daß sich durch die gleichzeitige Leistungsaufnahme von zwei Aktuatoren die Einrückgeschwindigkeit unzulässig vermindert.

Das kann unter allen Umständen dadurch sichergestellt werden, daß die Schaltaktuatoren dieser Kupplungen zur redundanten Absicherung in Serie verknüpft sind (Anspruch 11). Das bedeutet, daß der zweite Aktuator erst betätigt werden kann, wenn der erste bereits geschaltet hat. Die zum Halten benötigte Kraft ist dann bereits wesentlich geringer. Außerdem wird dadurch verhindert, daß bei einer Störung im Steuergerät oder in der Verkabelung zur Ansteuerung eines Magnetventils eine hierarchisch tiefe Sperre aktiviert wird, ohne daß zuvor die höheren aktiviert werden.

Im Gegensatz zu geländegängigen Personenkraftwagen kann es bei schweren Lastfahrzeugen vorteilhaft sein, beim Bremsen die Achsen zu verbinden. Dazu ist vorgesehen, daß die Kupplung für die Längssperre bzw. die Zuschaltung des Vorderachsantriebes und ggf auch die Kupplung der Zwischenachssperre beim Bremsen geschlossen wird (Anspruch 12). Dadurch werden bei solchen Fahrzeugen, vor allem bei Fahrzeugen ohne ABS, unterschiedliche Bremskräfte zwischen Vorderachse und Hinterachse ausgeglichen und die Blockierneigung einzelner Achsen durch statische oder dynamische Achslastverlagerung verhindert. Insgesamt wird so ein Gewinn an Fahrstabilität erreicht, solange nur keine Quersperren ausgelöst werden.

Das Steuersystem braucht auch den Schaltzustand einzelner Kupplungen angebende Rückmeldesignale. Diese werden üblicherweise von Sensoren an den Aktuatoren abgenommen. Defekte solcher Aktuatoren können empfindliche Betriebsstörungen hervorrufen und müssen daher erkannt werden. In Weiterbildung der Erfindung ist daher vorgesehen, daß aus den Raddrehzahlsignalen den Schaltzustand einzelner Kupplungen angebende Rückmeldesignale gebildet werden und diese in der Steuereinheit entweder direkt oder zur Kontrolle anderer Rückmeldesignale benutzt werden (Anspruch 13).

Eine weitere Sicherheitsfunktion, die die Weiterfahrt bei Defekten gestattet, besteht darin, bei Ausfall eines Drehzahlgebers oder eines Lenkwinkelgebers die Kupplung für die Längssperre bzw Zuschaltung des Vorderachsantriebes und ggf auch der Zwischenachssperre zu schließen (Anspruch 14). Es hat sich nämlich gezeigt, daß dieser Zustand für die Fahrzeugstabilität und Traktion günstiger ist. Außerdem kann der Ausfall das Fahrzeug im Gelände ereilen.

In einer vorteilhaften Ausführungsform werden einzelne Raddrehzahldifferenzen mit Schwellenwerten verglichen, unterhalb derer diese bei der Berechnung der Schlupfsummen nicht berücksichtigt, sondern zur Eichung verwendet werden (Anspruch 15). Damit ist zum einen sichergestellt, daß nicht geringfügige Durchmesserunterschiede der Reifen irgendwann und unerwartet zur Betätigung einer Sperre führen. Zum anderen ist damit ein Kriterium für einen regulären Zustand geschaffen, in dem eine Eichung stattfinden kann.

In einer bevorzugten Ausführung der Erfindung werden formschlüssige Kupplungen verwendet, die von einfachwirkenden Aktuatoren eingerückt werden und bei Abfall des übertragenen Drehmomentes unter einen bestimmten Wert durch Federkraft ausgerückt werden (Anspruch 16). Formschlüssige Kupplungen bringen gegenüber Lamellenkupplungen eine erhebliche Ersparnis an Einbauraum und zeichnen sich durch kurze Schaltwege aus, die sehr schnell zurückgelegt werden können. Die Aktuatoren können so sehr einfach und ohne irgendwelche Verzögerungsglieder ausgeführt werden. Die Steuerung nach Schlupfsummen, die bei Lamellenkupplungen eine Verschleißminderung bringt, kommt formschlüssigen Kupplungen besonders entgegen, weil dadurch unabhängig vom Gradienten der Drehzahldifferenz Einkuppeln bei der optimalen Differenzdrehzahl unter allen Umständen gewährleistet ist. Die durch den Wegfall einer Ausrücksteuerung mit ihren bekannten Problemen erzielte Vereinfachung der Steuerung multipliziert sich nicht nur mit der Anzahl der Moduln, sondern sie vereinfacht das gesamte System in einem weit darüber hinausgehenden Ausmaß.

In Verfeinerung der Erfindung kann bei formschlüssigen Kupplungen mit Auslösung durch Abfall des Drehmomentes noch vorgesehen sein, daß geschlossene Kupplungen während des Gangschaltens im Hauptgetriebe im geschlossenen Zustand festgehalten werden (Anspruch 17). Die bereits vorgesehene Haltefunktion kann so zusätzlich noch dazu verwendet werden, ein ungewolltes Lösen einzelner Kupplungen beim Schalten im Hauptgetriebe zu unterbinden. Zweckmäßig ist dazu ein Kontakt am Kupplungspedal anzubringen, der sobald und solange dieses niedergedrückt wird bei eingerückten formschlüssigen Kupplungen die Haltefunktion auslöst.

Im folgenden wird die Erfindung anhand von Abbildungen näher beschrieben und erläutert. Es stellen dar:
- Figur 1: ein Funktionsschema für 4x4 Fahrzeuge,
- Figur 2: ein Funktionsschema für 6x6 Fahrzeuge,
- Figur 3: ein Zeitschaubild der Zuschaltbedingungen für 4x4 Fahrzeuge,
- Figur 4: ein Zeitschaubild der Zuschaltbedingungen für 6x6 Fahrzeuge,
- Figur 5: ein Ablaufschaubild zur Steuereinheit der Hinterachs-Quersperre,
- Figur 6: ein Übersichtsschaubild, das den Ablauf in der gesamten Steuereinheit veranschaulicht.

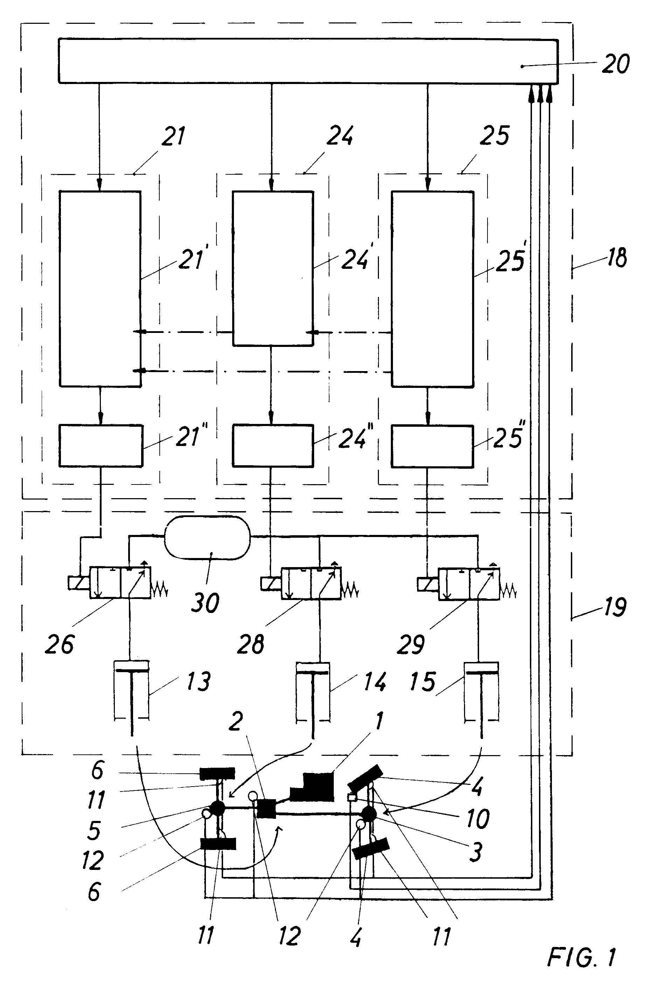

Fig.1 versinnbildlicht ein Fahrzeug mit zwei angetriebenen Achsen (4x4-Fahrzeug) durch seinen Antriebsstrang, der, vom Motor-Getriebeblock 1 ausgehend, aus einem Verteilergetriebe mit schaltbarer Kupplung 2, einem Vorderachsdifferential mit Sperrkupplung 3 und einem Hinterachsdifferential mit Sperrkupplung 5 besteht. Die Vorderräder sind mit 4, die Hinterräder mit 6 bezeichnet. Die schaltbare Kupplung 2 des Verteilergetriebes dient entweder dem Zuschalten des Vorderachsantriebes oder dem Sperren seines Längsdifferentiales (was im folgenden, soferne nicht eigens erwähnt, nicht unterschieden wird, da die Wirkung durchaus ähnlich ist).

Weiters gehören zum Antriebsstrang Sensoren 10,11,12 und Aktuatoren 13,14,15. Der Sensor 10 ist ein Lenkwinkelsensor. Die Sensoren 11 sind hier nahe den Rädern 4,6 angeordnete Drehzahlsensoren, doch können sie aufgrund der bekannten Übersetzungsverhältnisse auch am Eingang oder Ausgang der einzelnen Getriebe oder sonstwo angeordnet sein. Die Sensoren 12 sind Statussensoren für die Schaltstellungen einzelner Organe, wie Aktuator, Kupplung, Bremspedal etc. Für die Schaltstellung der Aktuatoren sind sie nicht erforderlich, da deren Status auch anders ermittelt werden kann. Die Aktuatoren 13,14,15 sind an den zu betätigenden Kupplungen 2,3,5 angebracht. Bei pneumatischer Betätigung sind es Druckzylinder, die stark vergrößert eingezeichnet sind, die Pfeile zeigen ihren wahren Platz an: Aktuator 13 am Verteilergetriebe, 14 am Hinterachsdifferential und 15 am Vorderachsdifferential.

Das Steuersystem besteht aus einem Steuergerät 18 und aus der Betätigungssteuerung 19. Im Steuergerät 18 kann man, obwohl nicht unbedingt topografisch, zwischen einem Datenerfassungsteil 20 und den Moduln 21,24,25 unterscheiden, welch letztere wieder jeweils aus einem Berechnungsteil 21',24',25' und aus einem Absicherungsteil 21'',24'',25'' bestehen. Die schlupfabhängigen Entscheidungen werden in den Berechnungsteilen 21', 24',25' vorbereitet und getroffen, die Sicherheitskontrollen (z.B. keine Einrückung der Quersperren ab einer bestimmten Fahrgeschwindigkeit, etc) in den Absicherungsteilen 21'', 24'', 25''. Die Moduln 21,24,25 stellen die elektrischen Steuersignale für die Magnetventile 26,28,29 bereit, die im einfachsten Fall Zweistellungsventile sein können und den Zustrom der Druckluft von einem Reservoir 30 zu den Aktuatoren 13,14,15 steuern.

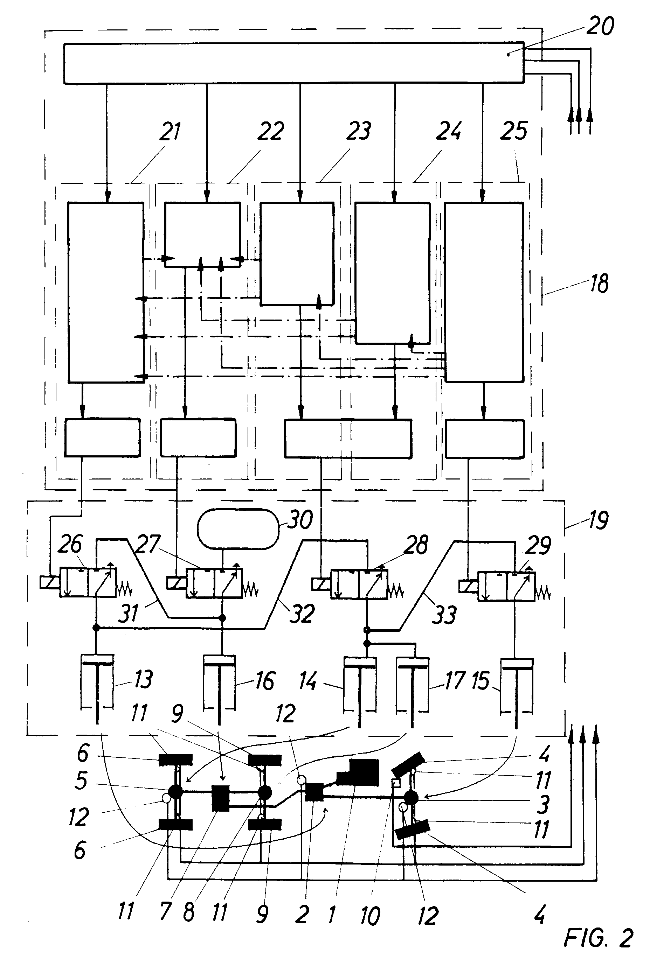

Fig.2 zeigt eine Abwandlung für Fahrzeuge mit drei angetriebenen Achsen, wobei gleiche Teile die gleichen Bezugszeichen tragen. Die hinzugekommenen Teile sind ein Zwischenachsdifferential mit Sperrkupplung 7, ein zweites Hinterachsdifferential mit Sperrkupplung 8 sowie deren Aktuatoren 16,17 und zweite Hinterräder 9. Das Steuergerät 18 enthält zwei weitere Moduln, den Zwischenachssperrenmodul 22 und den zweiten Hinterachsquersperrenmodul 23. Weiters ist noch ein Steuerventil 27 für den Aktuator 16 der Zwischenachssperre hinzugekommen. Die Steuerung für die Aktuatoren 14 und 17 wird von einem gemeinsamen Magnetventil 28 besorgt. Durch Weglassen der Teile 3,15,29,25 würde daraus ein 6x4 Fahrzeug entstehen, auf das die Erfindung auch anwendbar ist.

Zwischen Fig.1 und Fig.2 besteht noch ein weiterer Unterschied: In ersterer werden die Aktuatoren 13,14,15 über parallele Luftleitungen vom Reservoir 30 aus versorgt. Das könnte bei geringem Volumen des Reservoirs und gleichzeitiger Betätigung mehrerer Aktuatoren zu einer Schaltverzögerung führen. Deshalb ist die Anordnung in Fig. 2 so getroffen, daß die Druckluftzufuhrleitung 31 für das Magnetventil 26 der Längssperre erst stromabwärts des Magnetventils 27 für die Zwischenachssperre abzweigt, daß die Druckluftzufuhrleitung 32 für das Magnetventil 28 der Hinterachsquersperre erst stromabwärts des Magnetventiles 26 der Längssperre abzweigt und auch die Leitung 33 zum Magnetventil 29 der Vorderachssperre erst stromabwärts des Magnetventiles 28 für die Hinterachssperre abzweigt.

Bei Verwendung elektromagnetischer Aktuatoren kann diese Anordnung mittels einer entsprechenden elektrischen Schaltung nachgebildet werden. Damit ist nicht nur die gleichzeitige Betätigung zweier Kupplungen ausgeschlossen, sondern auch eine redundante Absicherung der Hierarchie der Sperren geschaffen.

Diese Hierarchie der Sperren ist aus dem Kraftfluß und aus der fahrdynamischen Wirkung der einzelnen Sperren abzuleiten, und bedeutet, wie bei jeglicher Hierarchie, daß einzelne Sperren mehr Einfluß als andere haben. Gemeint ist sowohl direkter Einfluß auf die Fahrdynamik als auch indirekter Einfluß auf die anderen Sperren. Wenn der Hierarchie nicht Rechnung getragen wird, entsteht ein erratisches Hin- und Herschalten der einzelnen Sperren. Wenn die Hierarchie zu starr ist, kommen die Sperren nicht voll zur Geltung. Bei Lastwagen ist die Hierarchie, von oben beginnend, Zwischenachssperre (wenn 6x6), Längssperre bzw. Zuschaltung des Vorderachsantriebes, Hinterachsquersperre und zuletzt Vorderachsquersperre, unter anderem, um die Lenkbarkeit des Fahrzeuges so wenig wie möglich zu beeinträchtigen.

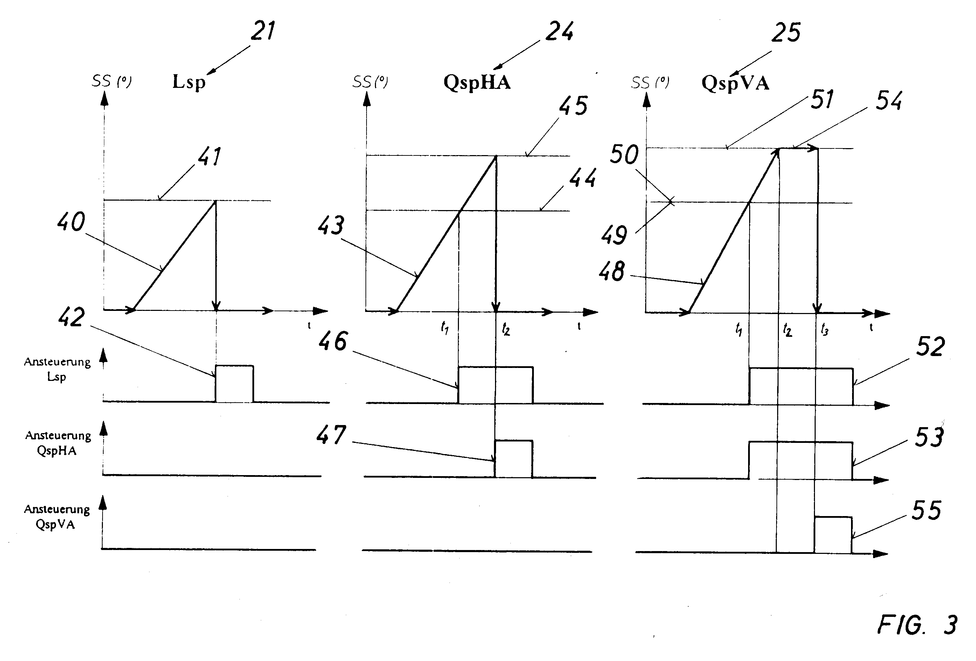

Fig. 3 zeigt im Prinzip den zeitlichen Ablauf der Betätigung der Kupplungen 2,3,5 (Fig.1) durch die entsprechenden Moduln in Abhängigkeit des Schlupfes; von links nach rechts zuerst den Modul 21 der Längssperre, den Modul 24 der HA-Quersperre und den Modul 25 der VA-Quersperre. Weitere Schaltkriterien sind zunächst weggelassen. In Modul 21 wird aus den Raddrehzahlsignalen der Sensoren 11 (Fig. 1) ein Schlupf, genauer: aus der Differenz der Mittelwerte der Drehzahlen der Vorderräder 4 und der Hinterräder 6 unter Berücksichtigung des Lenkwinkels eine Drehzahldifferenz, berechnet. Aus dieser Drehzahldifferenz wird durch Integration bzw. Aufsummieren eine Schlupfsumme gebildet.

Im obersten Diagramm auf der linken Seite ist daher die Schlupfsumme auf der Ordinate (sie hat die physikalische Dimension eines Winkels) und die Zeit auf der Abszisse aufgetragen. Konstante Drehzahldifferenz erscheint daher als aufsteigende Gerade 40, die - je steiler desto früher - die für die Längssperre vorgegebene Schlupfsummenschwelle 41 (SSS_LSpVG) erreicht. Dadurch wird das Steuersignal zum Einrücken der Sperrkupplung am Verteilergetriebe 2 an das Magnetventil 26 gegeben. Es wird dann für eine vorgegebene Zeit (etwa 2 Sekunden) festgehalten bzw für diese Zeit eine Rückschaltung verhindert. Das ist in der darunterliegenden Kurve (Ansteuerung Längssperre) mit dem Rechtecksignal 42 angedeutet.

In Modul 24 (Bildmitte) für die HA-Quersperre wird aus den Raddrehzahlsignalen der Sensoren 11 (Fig.1) ein Schlupf, genauer: aus der Differenz der Drehzahlen der Hinterräder 6 eine Drehzahldifferenz, berechnet. Aus dieser Drehzahldifferenz wird wieder durch Aufsummieren eine Schlupfsumme gebildet, die bei konstantem Schlupf eine aufsteigende Gerade 43 ist. Hier sind für die Schlupfsummen aber zwei Schwellen vorhanden, eine erste Schwelle 44 (SSS_LSpVG_by_QSpHA) und eine zweite 45 (SSS_QSpHA_by_QSpHA oder kurz SSS_QSpHA). Es fällt auf, daß hier im Modul Quersperre Hinterachse unterhalb der Schwelle 45 für die Betätigung der Quersperrenkupplung 5 eine Schwelle 44 für die Betätigung einer modulfremden Kupplung 2 der Längssperre ist. Diese wird zum Zeitpunkt t1 erreicht, die Längssperre wird angesteuert und für eine bestimmte Zeit gehalten (Rechtecksignal 46), was in diesem Fall zumindest bedeutet, daß ein Wiederausrücken dieser Sperre für diese bestimmte Zeit nicht möglich ist. Wenn der Schlupf an den Hinterrädern dadurch nicht vermindert wird, steigt die Schlupfsumme weiter, bis zur Zeit t2 die Schwelle 45 erreicht ist. Nun wird erst die HA-Quersperre angesteuert (Rechtecksignal 47). Oft wird der Schlupf aber bereits durch die Längssperre so weit vermindert, daß es gar nicht mehr zur Ansteuerung der Quersperre kommt. Dann wurde also die Längssperre nicht von ihrem eigenen, sondern vom Quersperrenmodul eingerückt.

Der Modul 25 (VA-Quersperre), in Fig. 3 ganz rechts, kann von der Drehzahldifferenz der Vorderräder 4 ausgehen. Daraus wird wieder eine Schlupfsumme ermittelt und ihre Gerade 48 schneidet drei Schlupfsummenschwellen: Zuerst die Schwelle 49, bei deren Erreichen die Längssperre zugeschaltet wird (SSS_LSp_by_QSpVA), dann die Schwelle 50 (hier ist sie gleich der vorhergehenden) (SSS_QSpHA_by_QSpVA), bei deren Erreichen die HA-Quersperre zugeschaltet wird und erst zuletzt die eigene Schwelle 51, bei der auch die VA-Quersperre zugeschaltet wird (SSS_QSpVA). Die entsprechenden Ansteuerungen sind wieder darunter durch die Rechtecksignale 52,53,55 angedeutet. Die Signale 52,53 werden wieder für eine bestimmte Zeit gehalten. Zusätzlich ist noch eine Totzeit 54 vorgesehen, damit die Betätigung der VA-Quersperre erst nach einiger Zeit erfolgt, um die Lenkbarkeit des Fahrzeuges möglichst lange zu erhalten, was auch durch eine noch höher liegende Schwelle zu erreichen wäre.

Alle Schlupfsummenschwellen, sie werden im folgenden zusammenfassend SSS_* genannt (Die Schwellen für modulfremde Kupplungen SSS_*_by_*), können Konstanten, aber auch etwa von einer Drehzahl abhängige Variable sein, sie können auch je nach gewähltem Gang oder für Zug (Motor treibt) und Schub (Motor bremst) verschieden gewählt sein.

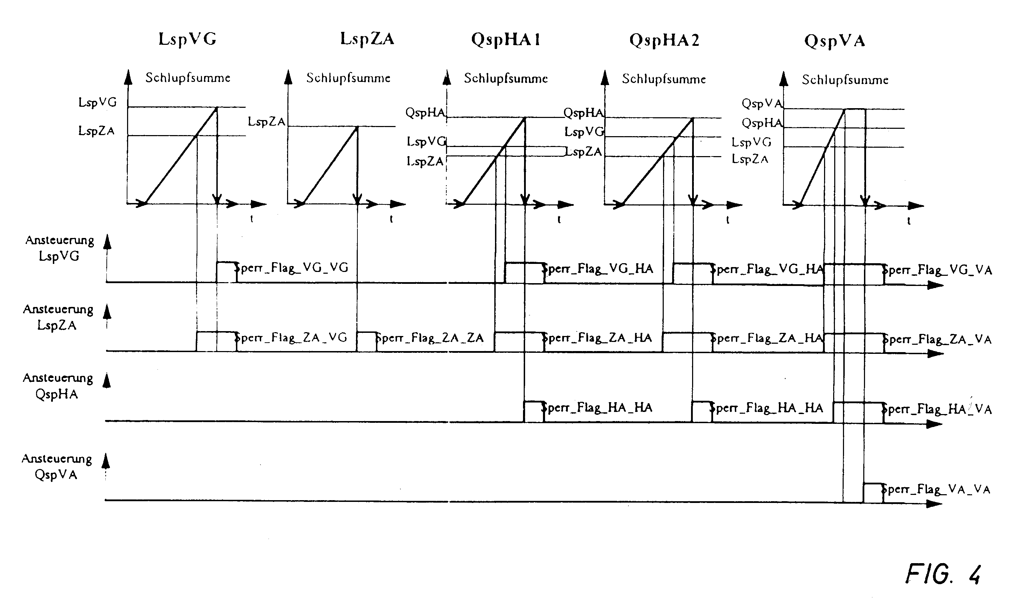

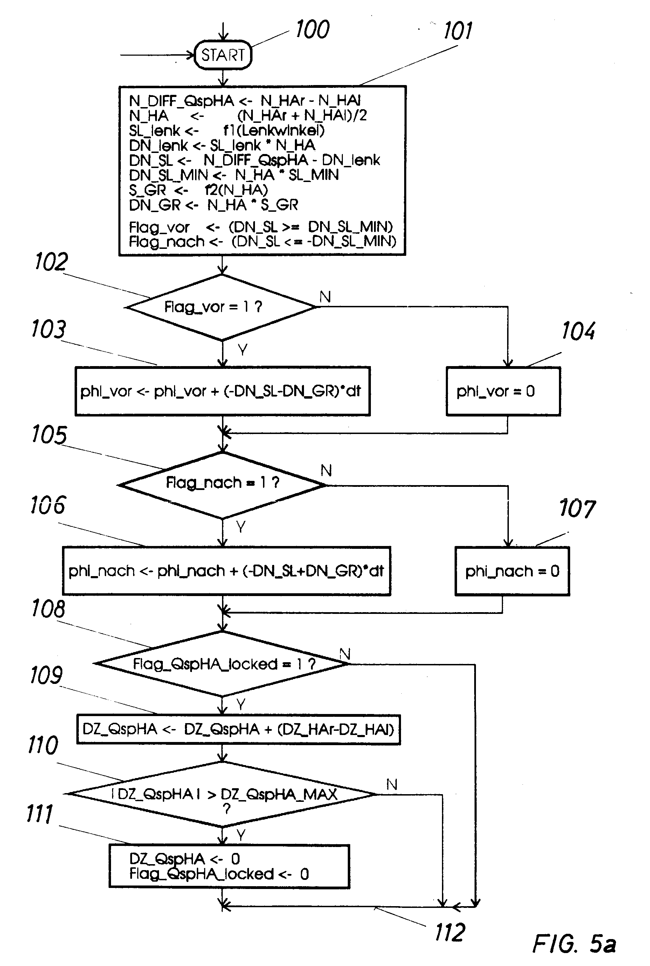

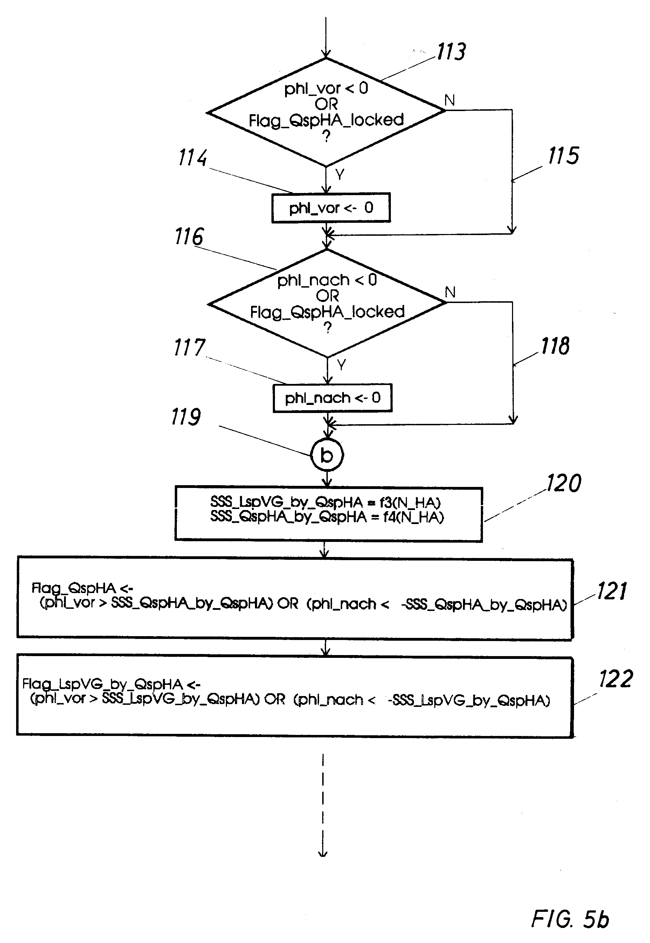

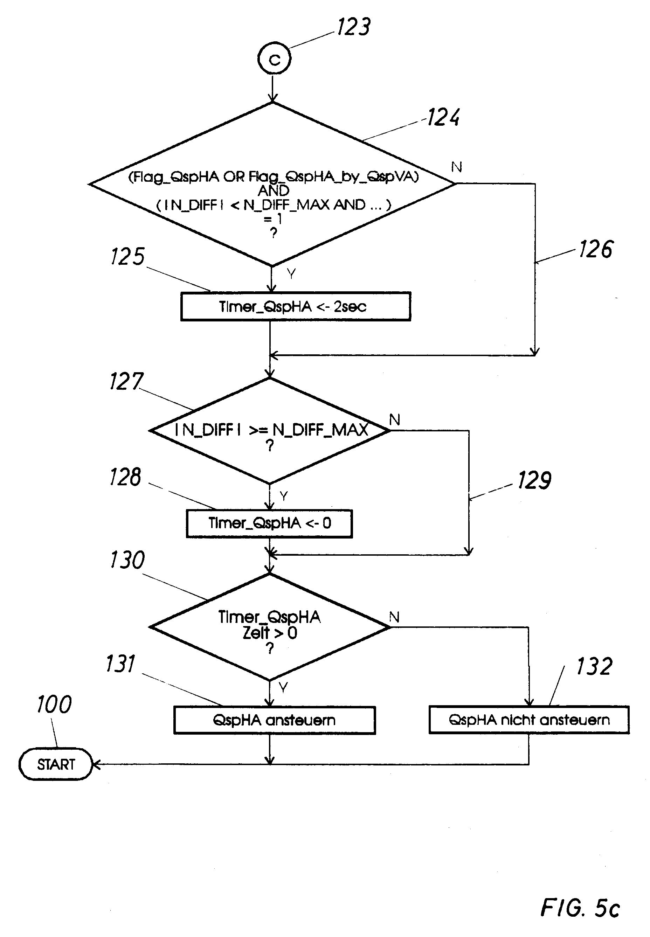

Im Zeitschaubild der Fig.4 für ein 6x6 Fahrzeug kommen noch hinzu: Modul 22 für die Sperre des Zwischenachsdifferentials 7 (Fig.2) und Modul 24 für die Sperre des zweiten HA-Querdifferentials 8 (Fig.2). Der Ablauf ist hier analog und entsprechend der Tatsache, daß die Zwischenachssperre die hierarchisch höchste ist. Im Vorgriff auf Fig. 5 sind hier noch die Bezeichnungen der Flags eingetragen, die gemäß Programm zur Aktivierung der Sperren führen.

Figur 5 zeigt exemplarisch den repetitiven Programmablauf im Berechnungsteil 24' des Moduls 24 der Kupplung 5 der HA-Quersperre, beginnend mit dem START-Feld 100. In den Formeln ist die Wertzuweisung einer Variablen mit "<-" bezeichnet und es werden die folgenden Bezeichnungen verwendet:
- N_DIFF_QSpHA: Drehzahldifferenz der beiden Hinterräder 6
- N_HAr: Drehzahl des rechten Hinterrades
- N_HA1: Drehzahl des linken Hinterrades
- N_HA: Mittlere Drehzahl der Hinterräder
- SL_Lenk: Durch Lenkeinschlag verursachter Schlupf (Schlupf ist die mit einer Drehzahl dimensionslos gemachte Drehzahldifferenz), wird der Funktionstabelle f1 entnommen
- DN_Lenk: Durch Lenkeinschlag verursachte Drehzahldifferenz
- DN_SL: Dynamische Drehzahldifferenz
- DN_SL_MIN: untere Schwelle der dynamischen Drehzahldifferenz, unter der Drehzahldifferenzen unberücksichtigt bleiben
- SL_MIN: untere Schwelle des dynamischen Schlupfes, unter der Drehzahldifferenzen unberücksichtigt bleiben
- S_GR: reifenspezifischer Grenzschlupf, abhängig vom übertragenen Drehmoment, wird einer Funktionstabelle f2 entnommen
- DN_GR: zugehöriger Grenzwert der Differenzdrehzahl
- Flag_vor: Merker, der gesetzt wird, wenn der Schlupf voreilend ist (Zugschlupf)
- Flag_nach: Merker, der gesetzt wird, wenn der Schlupf nacheilend ist (Schubschlupf)

Im Feld 101 werden alle diese Größen eingesetzt und die Flags für Zug- oder Schubschlupf definiert. In den Feldern 102,105 wird entschieden, ob Zug- oder Schubschlupf auftritt oder ob die Drehzahldifferenz unter der Schwelle DN_SL_MIN liegt. Im ersten Fall wird in Feld 103 eine Zugschlupfsumme phi _vor aufsummiert und in Feld 107 eine Schubschlupfsumme phi_nach gleich Null gesetzt; im zweiten Fall wird in Feld 106 die Schubschlupfsumme phi_nach aufsummiert und in Feld 104 die Zugschlupfsumme phi_vor gleich Null gesetzt; und im dritten Fall werden in den Feldern 104,107 beide Schlupfsummen gleich Null gesetzt, wodurch, wie weiter unten zu sehen, das gesamte Programm ohne Wirkung nach außen durchlaufen wird.

In Feld 108 wird abgefragt, ob der Merker Flag_QSpHA_locked noch vom vorherigen Durchlauf gesetzt ist. In Feld 109 wird die Differenzdrehzahl aufsummiert und dann in Feld 110 kontrolliert, ob der Drehwinkel erreicht ist, bei dem man sicher sein kann, daß entweder die Sperre offen oder die Achse gebrochen ist. Wenn Ja (Y), ist die Sperre offen und es wird in Feld 111 die Summe Null gesetzt, sodaß beim nächsten Durchgang mit der Aufsummierung neu begonnen wird. Wird in Feld 108 festgestellt, daß die Sperre bereits offen ist (N), werden die Felder 109,110,111 entlang 112 umgangen.

Wenn die Sperre gemäß Feld 108 oder Feld 111 offen ist, werden in den Feldern 113 bis 117 die Schlupfsummen phi_vor und phi_nach auf Null gesetzt und eine Vorzeichenbegrenzung vorgenommen, weil die Schlupfschwellen vorzeichenabhängig festgelegt sein können und weil sichergestellt sein muß, daß die Schlupfsummenkurven 43 (Fig.3) nicht ihren Quadranten wechseln, anders gesagt, daß phi_vor >= 0 und phi_nach <= 0 ist (Felder 114,117). Das runde Feld 119 dient nur der Orientierung.

In Feld 120 werden die folgenden Schlupfsummenschwellen den Funktionstafeln f3 und f4 entnommen (sie hängen hier von der Hinterachsdrehzahl ab):
- SSS_LSpVG_by_QSpHA: Schlupfsummenschwelle im HA-Quersperrenmodul zur Betätigung der Längssperre
- SSS_QSPHA_by_QSpHA: Schlupfsummenschwelle im HA-Quersperrenmodul zur Betätigung der HA-Quersperre (kurz auch SSS_QSPHA genannt)

Im Feld 121 wird der Merker für die Auslösung der Quersperre und in Feld 122 die Merker für die Auslösung der Längssperre gesetzt, wenn die Schlupfsumme phi_vor oder phi_nach die entsprechende Schlupfsummenschwelle überschreitet.
- Flag_QSpHA: Merker für die Auslösung der HA-Quersperre
- Flag_LSpVG_by_QSpHA: Merker für die Auslösung der Längssperre durch das Modul der HA_Quersperre.

Feld 123 dient wieder der Orientierung. In Feld 124 werden die Merker, auch die von anderen Moduln stammenden, aufgelesen und die Drehzahldifferenzen aus Feld 101 einer Sicherheitskontrolle unterzogen (die Drehzahldifferenz darf beim Schalter einer Klauenkupplung nicht zu groß sein). Wenn diese bestanden ist (Y), wird der Timer in Feld 125 durchlaufen, der die Haltefunktion ausübt. Nach weiteren Kontrollen in den Feldern 127, 128 entscheidet der Timer 130 ob in Feld 131 das Ansteuersignal zu geben ist (Y) oder (Feld 132) nicht (N). Von dort wird wieder zum Startfeld 100 zurückgekehrt.

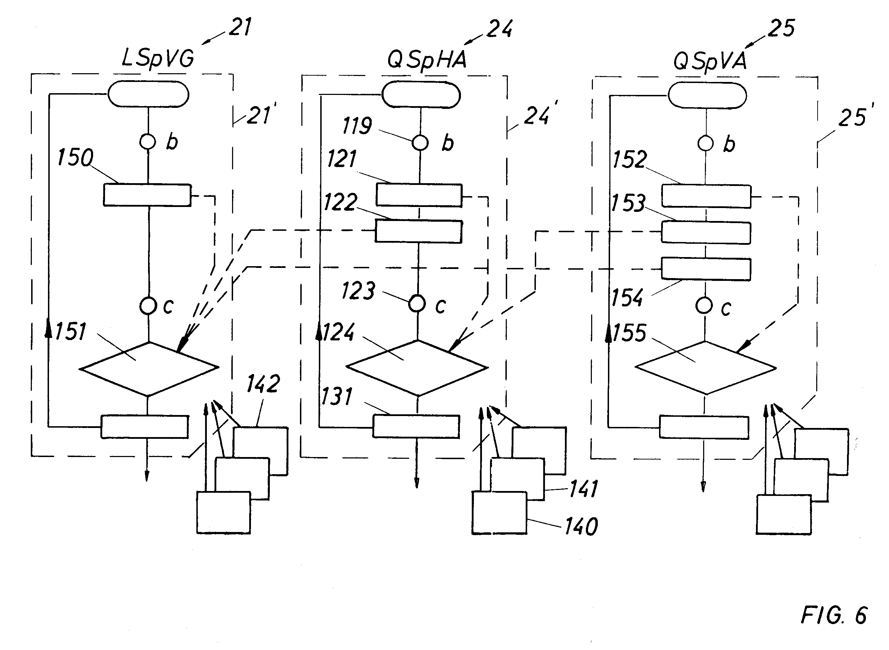

In Fig.6 ist der exemplarische Programmteil der Fig.5 zu den analogen Programmteilen der Moduln 21 (Längssperre) und 25 (VA_Quersperre) in Beziehung gesetzt. Im Modul 21 wird in Feld 150 der Merker zur Betätigung der Längssperre (Flag_LSpVG) gesetzt und in Modul 25 können drei Merker gesetzt werden: Flag_QSpVA in Feld 152, Flag_QSpHA_by_QSpVA in Feld 153 und Flag_LSpVG_by_QSpVA in Feld 154. Alle diese Merker sind von allen drei Moduln aus zugänglich, sie werden im Modul 21 in Feld 151, in Modul 24 in Feld 124 und in Modul 25 in Feld 155 abgefragt.

Die so erzeugten Signale gehen nun noch in die Prüfungsteile 21'',24'',25'' und von diesen dann zu den Magnetventilen 26,28,29.

Es können noch weitere Auslösekriterien vorgesehen sein, was durch die Felder 140,141,142 angedeutet ist. So kann etwa durch Feld 140 bewirkt werden, daß die Kupplung (2) für die Längssperre bzw die Zuschaltung des Vorderachsantriebes und ggf auch die Kupplung (7) der Zwischenachssperre beim Bremsen geschlossen wird. Weiters kann durch Feld 141 verhindert werden, daß eine geschlossene Kupplung (2,3,5;2,3,5,7,8) während des Gangschaltens im Hauptgetriebe (1) öffnet. Schließlich kann Feld 142 dafür sorgen, daß bei Ausfall eines der Drehzahlsensoren (11) oder eines Lenkwinkelsensors (10) die Kupplung (2) für die Längssperre bzw Zuschaltung des Vorderachsantriebes und ggf auch die Kupplung (7) der Zwischenachssperre geschlossen wird.

## Patentansprüche

1. System zur selbsttätigen Steuerung der Kupplungen (2,3,5; 2,3,5,7,8) im Antriebsstrang eines allradgetriebenen Geländefahrzeuges, wobei ausgehend von Raddrehzahlsignalen Schlupfsignale gebildet, mit Schwellenwerten verglichen und so Steuersignale für die Kupplungen (2,3,5; 7,8) erzeugt werden, **dadurch gekennzeichnet**, daß
a) für jede einzelne Kupplung (2,3,5,7,8) jeweils ein eigenes Steuermodul (21,24,25; 21,22,23,24,25) vorgesehen ist, das Steuersignale für die eigene Kupplung erzeugt.
b) die Steuermoduln (24,25; 21,23,24,25) der hierarchisch tieferen Kupplungen (3,5; 2,3,5,8) auch Steuersignale für eine oder mehrere hierarchisch höhere Kupplung(en) (2,5; 2,5,7,8) abgeben, bevor sie die eigene Kupplung (3,5; 2,3,5,8) ansteuern.
c) die Schlupfsignale durch Integration der Drehzahldifferenzen (DN_SL) gebildete Schlupfsummensignale (phi_nach, phi_vor) sind und mit Schlupfsummenschwellenwerten (SSS_*_by_*) verglichen werden.

2. System nach Anspruch 1, **dadurch gekennzeichnet**, daß die Schlupfsummenschwellenwerte (SSS_QSpHA_by_QSpVA, SSS_LSp_by_QSpVA, SSS_LSp_by_QSpHA; SSS_QSpHA_by_QSpVA, SSS_LSp_by_QSpVA, SSS_ZSp_by_QSpVA, SSS_LSp_by_QSpHA, SSS_ZSp_By_QSpHA) in den Steuermoduln (24,25; 21,23,24,25) der hierarchisch tieferen Kupplungen (3,5;2,3,5,8) für das Einrücken hierarchisch höheren Kupplungen (2,5; 2,5,7,8) tiefer liegen als die Schlupfsummenschwellenwerte (SSS_QSpVA, SSS_QSpHA; SSS_QSpVA, SSS_QSpHA, SSS_LSp) für das Einrücken der eigenen Kupplung (3,5; 2,3,5,8) und daß bei deren Erreichen nebst der Auslösung des Einkuppelns der hierarchisch höheren Kupplung (2,5; 2,5,7,8) eine Haltefunktion (125,130) aktiviert wird, die sicherstellt, daß die Kupplung für eine bestimmte Zeit eingerückt bleibt.

3. System nach Anspruch 2 mit permanentem Hinterachsantrieb und zuschaltbarem Vorderachsantrieb **dadurch gekennzeichnet**, daß die Kupplung (2) für die Zuschaltung des Vorderachsantriebes durch ihren eigenen Modul (21), durch einen Hinterachsquersperrenmodul (24; 23,24) und durch einen Vorderachsquersperrenmodul (25) schließbar ist und daß der Hinterachsquersperrenmodul (24; 23,24) die Kupplung (2) für die Zuschaltung des Vorderradantriebes für eine bestimmte Zeit eingerückt hält.

4. System nach Anspruch 2 mit permanentem Antrieb von Hinterachse und Vorderachse und zuschaltbarer Längssperre, **dadurch gekennzeichnet**, daß die Kupplung (2) für die Längssperre durch ihren eigenen Modul (21), durch einen Hinterachsquersperrenmodul (24; 23,24) und durch einen Vorderachsquersperrenmodul (25) schließbar ist und daß der Hinterachsquersperrenmodul (24; 23,24) und der Vorderachsquersperrenmodul (25) die Kupplung für die Längssperre (2) für eine bestimmte Zeit eingerückt hält.

5. System nach Anspruch 2, **dadurch gekennzeichnet**, daß die Kupplung (5; 5,8) der Hinterachsquersperre durch ihren eigenen Modul (24; 23,24) und durch den Modul der Vorderachsquersperre (25) schließbar ist und daß der Modul der Vorderachsquersperre (25) die Kupplung (5; 5,8) der Hinterachsquersperre für eine bestimmte Zeit eingerückt hält.

6. System nach Anspruch 2, **dadurch gekennzeichnet**, daß der Modul (25) der Vorderachsquersperre nur die eigene Kupplung (3) schließen kann.

7. System nach Anspruch 3 oder 4 mit zwei angetriebenen Hinterachsen und einer Zwischenachssperre, **dadurch gekennzeichnet**, daß die Kupplung (7) der Zwischenachssperre durch ihren eigenen Modul (22) und durch die Moduln (23,24) für die Quersperren der beiden Hinterachsen schließbar ist und daß der Modul (21) des Längsdifferentiales, der Modul (23,24) der Hinterachsquersperren und der Modul (25) der Vorderachsquersperre die Kupplung (7) für die Sperre des Zwischenachsdifferentiales für eine bestimmte Zeit eingerückt halten.

8. System nach Anspruch 7, **dadurch gekennzeichnet**, daß die Kupplungen (5,8) beider Hinterachsquersperren einem gemeinsamen Modul zugeordnet sind.

9. System nach Anspruch 2, **dadurch gekennzeichnet**, daß ab einer bestimmten Geschwindigkeit die Kupplungen (3,5; 3,5,8) der Quersperren selbst nicht schließbar sind, ihre Moduln (24,25; 23,24,25) aber eine hierarchisch höhere Kupplung (5,2; 5,8,2,7) schließen können.

10. System nach Anspruch 2, **dadurch gekennzeichnet**, daß die Schlupfsummenschwellen (SSS_*) so gelegt sind, daß nicht einzelne Kupplungen gleichzeitig geschalten werden können.

11. System nach Anspruch 10, **dadurch gekennzeichnet**, daß die Aktuatoren (13,14,15; 16,13,14,17,15) dieser Kupplungen als redundante Absicherung in Serie verknüpft sind.

12. System nach Anspruch 1, **dadurch gekennzeichnet**, daß die Kupplung (2) für die Längssperre bzw. die Zuschaltung des Vorderachsantriebes und ggf auch die Kupplung (7) der Zwischenachssperre beim Bremsen geschlossen wird.

13. System nach Anspruch 1, **dadurch gekennzeichnet**, daß aus den Drehzahlen (N_HAr,N_HA1,N-VAr,N_VA1) der einzelnen Räder den Schaltzustand einzelner Kupplungen (2,3,5; 2,3,5,7,8) angebende Rückmeldesignale gebildet werden und diese in der Steuereinheit (18) entweder direkt oder zur Kontrolle der Signale der Statussensoren (12) benutzt werden.

14. System nach Anspruch 1, **dadurch gekennzeichnet**, daß bei Ausfall eines der Drehzahlsensoren (11) oder eines Lenkwinkelsensors (10) die Kupplung (2) für die Längsperre bzw. Zuschaltung des Vorderachsantriebes und ggf auch die Kupplung (7) der Zwischenachssperre geschlossen wird.

15. System nach Anspruch 1, **dadurch gekennzeichnet**, daß einzelne Raddrehzahldifferenzen (DN_SL) mit Schwellenwerten (DN_SL_MIN) verglichen werden, unterhalb derer diese bei der Berechnung der Schlupfsummen (phi_vor, phi_nach) nicht berücksichtigt werden, sondern zur Eichung von Signalen (etwa des Signales vom Lenkwinkelsensor (10)) verwendet werden.

16. System nach einem der Ansprüche 1 bis 14, **dadurch gekennzeichnet**, daß die Kupplungen (2,3,5; 2,3,5,7,8) formschlüssige Kupplungen sind, die von einfachwirkenden Aktuatoren (13,14,15; 13,14,15,16,17) eingerückt und bei Abfall des übertragenen Drehmomentes unter einen bestimmten Wert durch Federkraft ausgerückt werden.

17. System nach Anspruch 16, **dadurch gekennzeichnet**, daß eine geschlossene Kupplung (2,3,5; 2,3,5,7,8) während des Gangschaltens im Hauptgetriebe (1) im geschlossenen Zustand festgehalten wird.

## Claims

1. System for the automatic control of the couplings (2,3,5;2,3,5,7,8) in the drive train of an all-wheel-driven off-the-road vehicle, wherein slip signals are derived from rotational wheel speed signals and the slip signals are compared with threshold values, whereby control signalsfor the couplings (2,3,5; 7,8) are generated, **characterized** in that
a) a dedicated control module (21,24,25; 21,22,23,24,25) generating control signals for its own coupling is provided for each separate coupling (2,3,5,7,8);
b) the control modules (24,25;21,23,24,25) of the hierarchically lower couplings (3,5; 2,3,5,8) also emit control signals for one or several hierarchically higher coupling(s) (2,5;2,5, 7,8) before actuating their own couplings;
c) the slip signals are slip total signals (phi_nach*(after)*, phi_vor*(before)*) and are compared with slip total threshold values (SSS_*_by_*).

2. System as in claim 1, **characterized** in that the slip total threshold values (SSS_QSpHA_by_QSpVA, SSS_LSp_by_QSpVA, SSS_ LSp_by_QSpHA; SSS_QSpHA_by_QSpVA, SSS_LSp_by_QSpVA, SSS_ZSp_ by_QSpVA, SSS_LSp_by_QSpHA, SSS_ZSp_by_QSpHA) in the control modules (24,25;21,23,24,25) of the hierarchically lower couplings (2,5;2,3,5,8) for engagement of hierarchically higher couplings (2,5;2,5,7,8) are lower than the slip total threshold values (SSS_QSpVA, SSS_QSpHA; SSS_QSpVA, SSS_QSpHA, SSS_LSp) for engagement of their own couplings (3,5; 2,3,5,8) and in that upon reaching these threshold values, a holding function (125,130) ensures that the coupling remains engaged for a given period of time, in addition to triggering the engagement of the hierarchically higher coupling (2,5;2,5,7,8).

3. System as in claim 2 with permanent rear axle drive and connectable front axle drive, **characterized** in that the coupling (2) for the connection of the front axle drive can be closed by its own module (21), by a transversal rear axle locking module (24; 23,24) and by a transversal front axle locking module (25) and in that the transversal rear axle locking module (24; 23,24) holds the coupling (2) for the connection of the front wheel drive in engagement for a given period of time.

4. System as in claim 2 with permanently driven of rear and front axles and an engageable longitudinal locking mechanism, **characterized** in that the coupling (2) of the locking mechanism can be closed by its own module (21), by a transversal rear axle locking module (24; 23,24) and by a transversal front axle locking module (25) and in that the transversal rear axle locking module (24; 23,24) and the transversal front axle locking module (25) hold the coupling of the locking mechanism (2) in engagement for a given period of time.

5. System as in claim 2, **characterized** in that the coupling (5;5,8) of the transversal rear axle locking mechanism can be closed by its own module (24; 23,24) and by the transversal front axle locking module (25) and in that the module of the transversal front axle locking mechanism (25) holds the coupling (5; 5,8) of the transversal rear axle locking mechanism in engagement for a given period of time.

6. System as in claim 2, **characterized** in that the module (25) of the transversal front axle locking can close only its own coupling (3).

7. System as in claim 3 or 4 with two driven rear axles and an intra-axle locking mechanism, **characterized** in that the coupling (7) of the intra-axle locking mechanism can be closed by its own module (22) and by the modules (23,24) of the transversal locking mechanisms of the two rear axles and in that the module (21) of the longitudinal differential, the module (23, 24) of the transversal rear axle locking mechanism and the module (25) of the transversal front axle locking mechanism holds the coupling (7) of the locking mechanism of the intra-axle differential in engagement for a given period of time.

8. System as in claim 7, **characterized** in that the couplings (5,8) of the two transversal rear axle locking mechanisms are associated with a common module.

9. System as in claim 2, **characterized** in that beyond a certain speed, the couplings (3,5; 3,5,8) of the transversal locking mechanisms themselves cannot be closed, but their modules (24,25; 23,24,25) are able to close a hierarchically higher coupling (5,2; 5,8,2,7).

10. System as in claim 2, **characterized** in that the slip total thresholds (SSS_*) are at such levels that separate couplings cannot be switched simultaneously.

11. System as in claim 10, **characterized** in that the actuators (13,14,15; 16,13,14,17,15) of these couplings are connected in series in order to provide redundant safety.

12. System as in claim 1, **characterized** in that the coupling (2) of the longitudinal locking mechanism or the connection of the front axle drive and possibly also the coupling (7) of the intra-axle locking mechanism are engaged during braking.

13. System as in claim 1, **characterized** in that acknowledgment signals indicating the engagement state of the individual couplings (2,3,5; 2,3,5,7,8) are formed from the rotational speeds (N_HAr,N_HA1,N-VAr,N_VA1) of the individual wheels and in that these are used in the control unit (18) either directly or for the control of the signals of the status sensors (12).

14. System as in claim 1, **characterized** in that the coupling (2) for the longitudinal locking or connection of the front axle drive and possibly also the coupling (7) of the intra-axle locking mechanism are closed in case of failure of one of the rotational speed sensors (11) or of a steering angle sensor (10).

15. System as in claim 1, **characterized** in that indivudual rotational wheel speed differences (DN_SL) are compared with threshold values (DN_SL_MIN) below which they are not taken into account when calculating the slip total (phi_vor*(before)*, phi_nach*(after)*), but which are used for the calibration of signals (e.g. the signals of the steering angle sensor (10)).

16. System as in one of the claims 1 to 14, **characterized** in that the couplings (2,3,5; 2,3,5,7,8) are positive couplings which are engaged by single-acting actuators (13,14,15;13,14, 15,16,17) and are disengaged by spring force when the transmitted torque drops below a given value.

17. System as in claim 16, **characterized** in that a closed coupling (2,3,5; 2,3,5,7,8) is held in its closed state during gear shifting in the main transmission (1).

## Revendications

1. Système de commande automatique des embrayages (2,3,5; 2,3, 5,7,8) dans le train d'entrainement d'un véhicule tout terrain à toutes roues motrices, dans lequel des signaux de glissement sont dérivés de signaux de vitesse rotative des roues, sont ensuite comparés avec des valeurs de seuil, et des signaux de commande sont ainsi générés et aux embrayages (2,3,5; 7,8) **caractérisé** en ce que
a) des modules de commande (21,24,25; 21,22,23,24,25) sont prévus chacun pour chacun des embrayages (2,3,5,7,8), fournissant des signaux de commande à leur propre embrayage;
b) les modules de commande (24,25;21,23,24,25) des embrayages à niveau hiérarchique inférieur (3,5; 2,3,5,8) fournissent aussi des signaux de commande à un ou plusieurs embrayage(s) à niveau hiérarchique supérieur (2,5;2,5,7,8) avant d'actionner l'embrayage propre à eux;
c) les signaux de glissement sont des signaux de glissement total (phi_nach*(après)*, phi_vor*(avant)*) formés par intégration et ils sont comparés avec des valeurs de seuil de glissement total (SSS_*_by_*).

2. Système selon la revendication 1, **caracterisé** en ce que les valeurs de seuil de glissement total (SSS_QSpHA_by_QSpVA, SSS_LSp_by_QSpVA, SSS_LSp_by_QSpHA; SSS_QSpHA_by_QSpVA, SSS_LSp_by_QSpVA, SSS_ZSp_by_QSpVA, SSS_LSp_by_QSpHA, SSS_ZSp_by_QSpHA) dans les modules de commande (24,25; 21,23, 24,25) des embrayages à niveau hiérarchique inférieur (2,5; 2, 3,5,8) coordonnés à l'engagement des embrayages à niveau hiérarchique supérieur (2,5;2,5,7,8) sont inférieurs aux seuils de glissement total (SSS_QSpVA, SSS_QSpHA; SSS_QSpVA, SSS_QSpHA, SSS_LSp) coordonnés à l'engagement des embrayages propres à eux mème (3,5; 2,3,5,8) et en ce que, quant ils sont atteints, une fonction de tenue (125,130) assure que l'embrayage reste engagé pendant un certain temps, en plus du déclenchement de l'engagement de l'embrayage à niveau hiérarchique supérieur (2,5;2, 5, 7,8).

3. Système selon la revendication 2 avec traction arrière permanente et traction avant connectable, **caracterisé** en ce que l'embrayage (2) destiné à engager l'entrainement de l'essieu avant est susceptible d'être engagé par son propre module (21), par le module de blocage transversal de l'essieu arrière (24; 23,24) et par un module de blocage transversal de l'essieu avant (25) et en ce que le module de blocage transversal de l'essieu arrière (24; 23,24) tient l'embrayage (2) pour la connection de la traction des roues avants en engagement pendant un certain temps.

4. Système selon la revendication 2 avec entrainement permanent des essieux avant et arrière et avec un méchanisme de blocage longitudinal, **caracterisé** en ce que l'embrayage (2) du méchanime de blocage longitudinal est susceptible d'être engagé par son propre module (21), par le module de blocage transversal de l'essieu arrière (24; 23,24) et par un module de blocage transversal de l'essieu avant (25) et en ce que le module de blocage transversal de l'essieu arrière (24; 23,24) et le module de blocage transversal de l'essieu avant (25) tiennent l'embrayage du mécanisme de blocage (2) en engagement pendant un certain temps.

5. Système selon la revendication 2, **caracterisé** en ce que l'embrayage (5;5,8) du mécanisme de blocage transversal de l'essieu arrière est susceptible d'être engagé par son propre module (24; 23,24) et par le module de blocage transversal de l'essieu avant (25) et en ce que le module de blocage transversal de l'essieu avant (25) tient l'embrayage (5; 5,8) du mécanisme de blocage transversal de l'essieu arrière en engagement pendant un certain temps.

6. Système selon la revendication 2, **caracterisé** en ce que le module (25) du mécanisme de blocage transversal de l'essieu avant n'est apte que d'engager son propre embrayage (3).

7. Système selon la revendication 3 ou 4 avec deux essieux arrières entrainés et un mécanisme de blocage de differentiel entre ces essieux, **caracterisé** en ce que l'embrayage (7) du mécanisme de blocage entre les essieux arrières est susceptible d'être engagé par son propre module (22) et par les modules (23,24) des mécanismes de blocage transversal des deux essieux arrières et en ce que le module (21) de blocage du differentiel longitudinal, le module (23,24) de blocage transversal des essieux arrières et le module (25) de blocage transversal de l'essieu avant tient l'embrayage (7) du mécanisme de blocage du differentiel entre les essieux arrières en engagement pendant un certain temps.

8. Système selon la revendication 7, **caracterisé** en ce que les embrayages (5,8) des deux mécanismes de blocage transversal des essieux arrières sont associés à un module commun.

9. Système selon la revendication 2, **caracterisé** en ce que à partir d'une certaine vitesse, les embrayages (3,5; 3,5,8) des mécanismes de blocage transversal ne peuvent être engagés, tandis que leurs modules (24,25; 23,24,25) sont capables d'engager un embrayage à niveau hiérarchique supérieur (5,2; 5,8,2,7).

10. Système selon la revendication 2, **caracterisé** en ce que les seuils de glissement total (SSS_*) sont choisis tels que des embrayages individuels ne peuvent être engagés simultanément.

11. Système selon la revendication 10, **caracterisé** en ce que les actuateurs (13,14,15; 16,13,14,17,15) de ces embrayages sont branchés en série afin de constituer une sécurité redondante.

12. Système selon la revendication 1, **caracterisé** en ce que l'embrayage (2) du mécanisme de blocage longitudinal oubien l'engagement de l'entrainement de l'essieu avant et, le cas échéant, aussi l'embrayage (7) du mécanisme de blocage du differentiel entre les essieux sont engagés pendant le freinage.

13. Système selon la revendication 1, **caracterisé** en ce que des signaux de confirmation, indiquant l'état d'engagement des embrayages (2,3,5; 2,3,5,7,8) sont générés à partir des vitesses de rotation (N_HAr,N_HA1,N-VAr,N_VA1) des roues individuels et en ce que ces signaux sont utilisés dans le dispositif de commande (18), oubien direcement, oubien pour vérifier les signaux fournis par les capteurs de status (12).

14. Système selon la revendication 1, **caracterisé** en ce que l'embrayage (2) pour le blocage longitudinal oubien l'engagement de l'entrainement de l'essieu avant et, le cas échéant, aussi l'embrayage (7) du mécanisme de blocage du différentiel entre les essieux arrières, sont engagés en cas de malfonction d'un des capteurs de vitesse rotative (11) ou d'un capteur de l'angle de braquage (10).

15. Système selon la revendication 1, **caracterisé** en ce que les différences des vitesses de roue individuelles (DN_SL) sont comparées avec les valeurs de seuil (DN_SL_MIN), et lorsqu' elles sont inférieures à ces seuils, elles ne sont pas prises en considération dans le calcul des glissements totaux (phi_vor *(avant)*, phi_nach*(après)*), cependant elles sont utilisées pour la calibration de signaux (par exemple du signal du capteur de l'angle de braquage (10)).

16. Système selon l'une des revendications 1 à 14, **caracterisé** en ce que les embrayages (2,3,5; 2,3,5,7,8) sont des embrayages à engagement positif actionnés par des actuateurs a simple effect (13,14,15;13,14, 15,16,17), dégagés par la force de ressorts lorsque le couple transmis devient inférieur à une valeur prédéterminée.

17. Système selon la revendication 16, **caracterisé** en ce qu'un embrayage (2,3,5; 2,3,5,7,8) engagé est tenu dans son état engagé pendant le changement de vitesse dans la boite de vitesses principale (1).
